# FASCICULE DE BREVET EUROPEEN

(11) **EP 4 280 542 B1**
(45) Date de publication et mention de la délivrance du brevet: **03.12.2025**
(21) Numéro de dépôt: 23172483.2
(22) Date de dépôt: 10.05.2023
(51) Int. Cl.: H04L 9/40

(54) **PROCEDE ET DISPOSITIF D'IDENTIFICATION BIOMETRIQUE**
VERFAHREN UND VORRICHTUNG ZUR BIOMETRISCHEN IDENTIFIZIERUNG
METHOD AND DEVICE FOR BIOMETRIC IDENTIFICATION

(30) Priorité: 18.05.2022 FR 2204692
(43) Date de publication de la demande: 22.11.2023
(73) Titulaire: Imprimerie Nationale, 75116 Paris (FR)
(72) Inventeur: DING, Xinghua, 75016 PARIS (FR); DIEUMEGARD, Michel, 75016 PARIS (FR)
(74) Mandataire: Brun, Philippe Alexandre Georges

(56) Documents cités:
- PERALTA DANIEL ET AL: "Distributed incremental fingerprint identification with reduced database penetration rate using a hierarchical classification based on feature fusion and selection", KNOWLEDGE-BASED SYSTEMS, ELSEVIER, AMSTERDAM, NL, vol. 126, 22 March 2017 (2017-03-22), pages 91 - 103, XP029999455, ISSN: 0950-7051, DOI: 10.1016/J.KNOSYS.2017.03.014
- WIN KHIN NANDAR ET AL: "Fingerprint classification and identification algorithms for criminal investigation: A survey", FUTURE GENERATION COMPUTER SYSTEMS, ELSEVIER SCIENCE PUBLISHERS. AMSTERDAM, NL, vol. 110, 18 November 2019 (2019-11-18), pages 758 - 771, XP086186383, ISSN: 0167-739X, [retrieved on 20191118], DOI: 10.1016/J.FUTURE.2019.10.019

## Description

### Domaine technique

La présente invention concerne le domaine d'identification biométrique avec comparaison des caractéristiques biométriques d'une personne à identifier avec les caractéristiques biométriques d'un sous-ensemble d'une population, stockées dans une base de données et rangées selon des listes.

### Technique antérieure

Avec le développement considérable des moyens de calcul, l'utilisation des systèmes d'identification biométriques présente un fort potentiel de développement. Les applications de ces systèmes comprennent la limitation d'accès à des installations sécurisées, ainsi que la vérification de l'identité d'un individu. Le document WIN KHIN NANDAR ET AL, "Fingerprint classification and identification algorithms for criminal investigation: A survey", FUTURE GENERATION COMPUTER SYSTEMS, ELSEVIER SCIENCE PUBLISHERS. AMSTERDAM, NL, vol.110, doi:10.1016/J.FUTURE.2019.10.019, ISSN 0167-739X, (20191118), pages 758 - 771, (20191118), XP086186383 exprime à ce titre le rôle fondamental que représente l'identification biométrique dans la sécurité et les enquêtes criminelles.

L'identification biométrique regroupe l'ensemble des techniques informatiques permettant de reconnaître automatiquement un individu à partir de ses caractéristiques physiques et biologiques. Dans le contexte de l'invention, on entend par « caractéristiques biométriques » l'ensemble des caractéristiques physiques spécifiques à une personne et permettant de l'identifier. On cite à titre d'exemple non limitatif la reconnaissance par empreintes digitales, la reconnaissance faciale, la reconnaissance vocale et la reconnaissance de l'iris.

Dans la suite de la description nous allons illustrer l'invention pour le cas d'une reconnaissance par empreintes digitales mais l'invention reste compatible avec les autres techniques de reconnaissances préalablement listées.

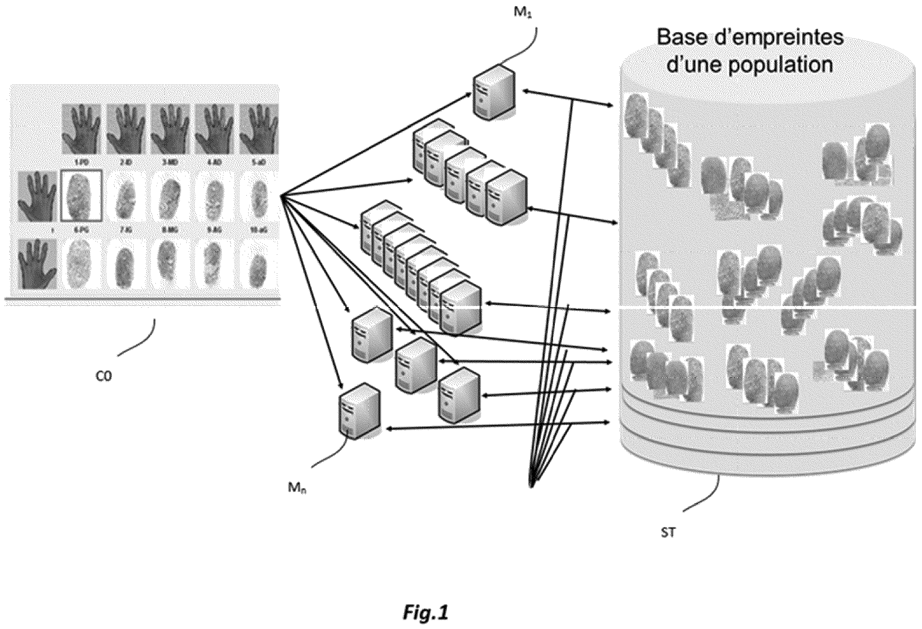

La figure 1 illustre un système automatisé d'identification par empreintes digitales AFIS (acronyme de Automated Fingerprint Identification System) selon l'état de l'art. Un système AFIS comprend un capteur C0, une pluralité d'unités de calcul M₁ à Mₙ et une unité de stockage ST d'une base de données. Le capteur C0 reçoit au moins une image d'une empreinte digitale de la personne à identifier (demandeur). Les caractéristiques biométriques sont dans ce cas les formes spécifiques constituant l'empreinte digitale communément appelées minuties. Les unités de calcul M₁ à Mₙ sont configurées pour comparer les caractéristiques biométriques extraites du demandeur avec les caractéristiques biométriques d'une population prédéfinies. Les données relatives à ladite population sont préalablement stockées dans l'unité de stockage ST. Si plusieurs caractéristiques biométriques extraites du demandeur coïncident avec celles d'une personne de la population enregistrée, cela signifie qu'il s'agit de la même personne. Lorsque la population à comparer est grande (de l'ordre des dizaines de millions), le temps de traitement pour identifier le demandeur devient très long. De plus, l'augmentation de la population visée fait augmenter drastiquement les moyens calculatoires et énergétiques requis pour l'identification.

A titre d'exemple, lors d'une première demande d'extraction d'un document d'identité, il est nécessaire de vérifier que les empreintes digitales du demandeur ne sont pas déjà enregistrées dans la base de données. Cela permet d'éviter la délivrance de plusieurs titres pour une seule personne et de détecter les tentatives de fraudes. Cette opération nécessite une comparaison des caractéristiques biométriques de tous les doigts du demandeur avec les caractéristiques des doigts de toute la population de la base de données. Dans ce cas, la population comparée présente des dizaines de millions d'individus afin de couvrir l'ensemble de la population nationale.

Une première solution connue concerne la multiplication du nombre d'unités de calcul afin d'accélérer le procédé d'identification. Le document PERALTA DANIEL ET AL, "Distributed incremental fingerprint identification with reduced database penetration rate using a hierarchical classification based on feature fusion and selection", KNOWLEDGE-BASED SYSTEMS, ELSEVIER, AMSTERDAM, NL, (20170322), vol. 126, doi:10.1016/J.KNOSYS.2017.03.014, ISSN 0950-7051, pages 91 - 103, XP029999455 divulgue une telle approche. L'inconvénient de cette solution consiste à augmenter les moyens matériels requis induisant une augmentation du coût de l'opération d'identification.

Une deuxième solution connue concerne l'utilisation de filtres basés sur des données de l'état civil du demandeur afin de réduire l'échantillon de la population à comparer. On cite à titre d'exemple des filtres basés sur la tranche d'âge du demandeur ou son sexe. Cette réduction de la population à comparer permet de diminuer le temps de comparaison. Cependant, cette solution présente un risque de fraude élevé, car le filtrage par état civil peut être détourné facilement par un fraudeur. Ce type de solution est non fiable pour des applications à haute sécurité.

Il existe donc un besoin de réduire la durée du procédé d'identification par comparaison de caractéristiques biométriques avec une large population tout en gardant une fiabilité des résultats obtenus.

### Exposé de l'invention

La présente invention vise à remédier au moins en partie à ce besoin.

Pour cela un premier objet de l'invention concerne un procédé d'identification biométrique d'un individu à identifier comprenant :
- une étape d'acquisition de données d'entrée, lesdites données d'entrée étant des données visuelles ou sonores de l'individu à identifier ;
- une étape de calcul de caractéristiques biométriques à partir des données d'entrée, lesdites caractéristiques biométriques calculées vérifiant des critères biométriques de classement parmi une pluralité ;
- une étape de sélection de plusieurs critères biométriques de classement vérifiés par lesdites caractéristiques biométriques calculées à partir des données d'entrée, parmi la pluralité de critères biométriques de classement ;
- une étape de sélection de plusieurs ensembles d'individus cibles au sein de la population globale prédéterminée, chaque ensemble d'individus cibles sélectionné satisfaisant l'un des critères biométriques de classement sélectionnés ;
- une étape de comparaison des caractéristiques biométriques de l'individu à identifier avec les caractéristiques biométriques propres d'individus cibles d'une population prédéterminée, chaque individu cible ayant des caractéristiques biométriques propres stockées dans une base de données ;

Pour réduire de manière drastique le temps de mise en œuvre d'un tel procédé et les ressources matérielles nécessaires à une telle mise en œuvre, ledit procédé d'identification biométrique comporte une étape de calcul d'un sous-ensemble de population dérivé résultant de l'intersection entre lesdits plusieurs ensembles d'individus cibles sélectionnés, c'est-à-dire un sous-ensemble d'individus cibles satisfaisant les critères biométriques de classement sélectionnés. L'étape de comparaison des caractéristiques biométriques de l'individu à identifier avec les caractéristiques biométriques propres d'individus cibles d'une population prédéterminée est agencée de sorte que lesdites caractéristiques biométriques de l'individu à identifier ne sont comparées qu'à celles des individus cibles appartenant audit sous-ensemble de population dérivé.

Selon un aspect particulier de l'invention, le nombre critères biométriques de classement sélectionnés pendant l'étape de sélection de plusieurs critères biométriques de classement peut être supérieur à 100.

Selon un aspect particulier de l'invention, chaque caractéristique biométrique peut être associée à une note de qualité.

Selon un aspect particulier de l'invention, l'étape de comparaison des caractéristiques biométriques peut être itérée pour une pluralité d'ensembles d'individus cibles associés à des critères biométriques de classement distincts selon un ordre déterminé par un coefficient de priorité associé à chaque ensemble d'individus cibles sélectionné à l'issu de l'étape de sélection de plusieurs ensembles d'individus cibles satisfaisant respectivement les critères biométrique de classement sélectionnés.

Selon un aspect particulier de l'invention, chaque caractéristique biométrique peut présenter :
- une première composante définissant la nature de la caractéristique biométrique,
- une deuxième composante définissant la valeur mesurée de la caractéristique biométrique.

Selon un aspect particulier de l'invention, la donnée d'entrée peut être l'image d'une ou plusieurs empreintes digitales et les caractéristiques biométriques peuvent comprendre au moins le nombre de minuties de même type, ou l'angle et la position d'une minutie, ou la longueur et la position d'une minutie ou la distance entre deux minuties et leurs positions respectives.

Un deuxième objet de l'invention concerne également un dispositif d'identification configuré pour mettre en œuvre les étapes d'un procédé selon l'invention.

Pour cela, un tel dispositif comprend :
- un capteur pour l'acquisition des données d'entrée visuelle ou sonore ;
- une unité de traitement pour calculer les caractéristiques biométriques à partir de l'entrée acquise par le capteur ;
- une unité d'indexation configurée pour stocker un registre d'indexation et pour réaliser l'étape de sélection d'un ensemble d'individus cibles ;
- une unité de stockage de données configurée pour stocker la base de données ;
- au moins une unité de calcul pour réaliser l'étape de comparaison.

Un troisième objet de l'invention concerne également un programme d'ordinateur comprenant des instructions qui, lorsque le programme d'ordinateur est exécuté par le dispositif d'identification selon l'invention, conduisent ledit dispositif d'identification à mettre en œuvre le procédé d'identification selon l'invention.

### Brève Description des Dessins

D'autres caractéristiques et avantages de la présente invention apparaîtront mieux à la lecture de la description qui suit en relation aux dessins annexés suivants :
[Fig. 1] la figure 1 illustre un système automatisé d'identification par empreintes digitale selon l'état de l'art.
[Fig. 2a] la figure 2a illustre un exemple d'une empreinte digitale comprenant des minuties.
[Fig. 2b] la figure 2b illustre des exemples de formes des minuties d'une empreinte digitale.
[Fig. 3] la figure 3 illustre un mode de réalisation du procédé d'identification selon l'invention.
[Fig. 4] la figure 4 illustre un exemple d'échantillonnage de la population comparée lors de l'exécution du procédé d'identification selon l'invention.
[Fig. 5] la figure 5 illustre un dispositif d'identification configuré pour mettre en œuvre les étapes du procédé selon l'invention.

La figure 1, décrite précédemment, illustre un système automatisé d'identification par empreintes digitale selon l'état de l'art.

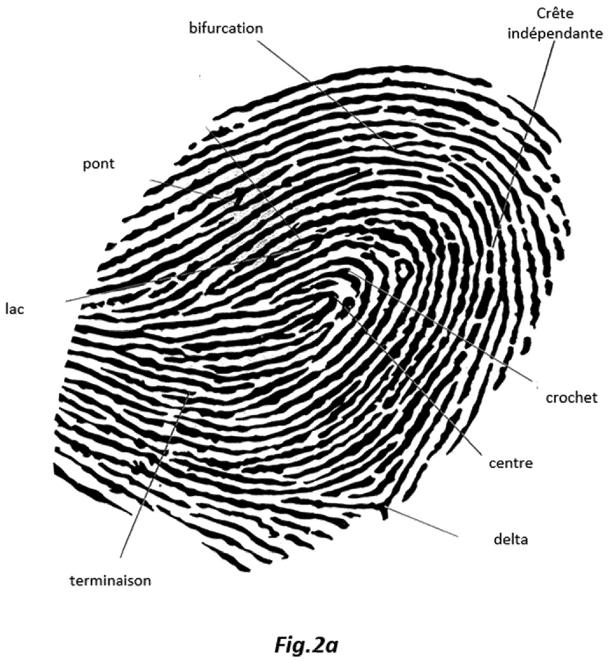

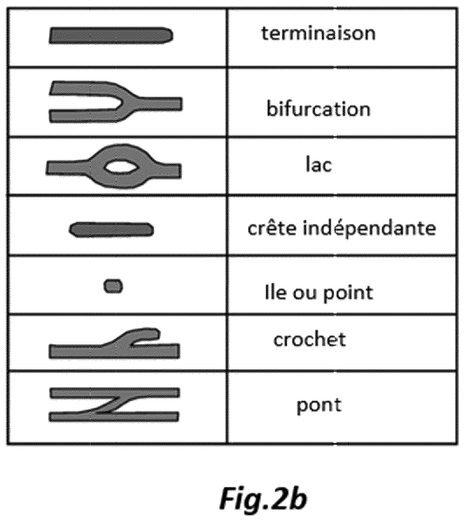

Nous allons commencer par décrire les caractéristiques biométriques exploitables à partir d'une empreinte digitale pour identifier un individu. La figure 2a illustre un exemple d'une empreinte digitale comprenant des minuties. La figure 2b illustre des exemples de formes des minuties d'une empreinte digitale. Une empreinte digitale est le dessin formé par un doigt sur un support suffisamment lisse pour qu'y restent marqués les dermatoglyphes. Les dermatoglyphes sont les figures de la face palmaire des doigts dessinées par les plis et les crêtes épidermiques chez les humains. Les empreintes digitales sont uniques à chaque individu et chaque doigt a son empreinte propre. La probabilité que deux personnes aient les mêmes empreintes digitales est infinitésimale : une chance sur 64 milliards. Plusieurs formes peuvent être identifiées et localisées dans une empreinte digitale afin d'identifier une personne. On cite à titre d'exemple les formes suivantes indiquées dans l'exemple de la figure 2a et listées dans le tableau de la figure 2b :
- La bifurcation : une seule ligne se divisant en deux lignes.
- Le pont : une courte crête entre deux crêtes parallèles.
- Le lac : une seule crête qui bifurque et se réunit peu après pour continuer comme une seule crête.
- La terminaison : la fin abrupte d'une ligne.
- Le delta : Rencontre de crêtes en forme de Y.
- Le centre (cœur) : Un cercle dans le dessin de la crête.
- Le crochet : une bifurcation avec une ligne courte qui se ramifie d'une ligne plus longue.
- L'ile : Une seule petite crête à l'intérieur d'une courte crête ou d'une crête terminale qui n'est pas reliée à toutes les autres crêtes.
- La ligne indépendante : une ligne qui commence, parcourt une courte distance et se termine.

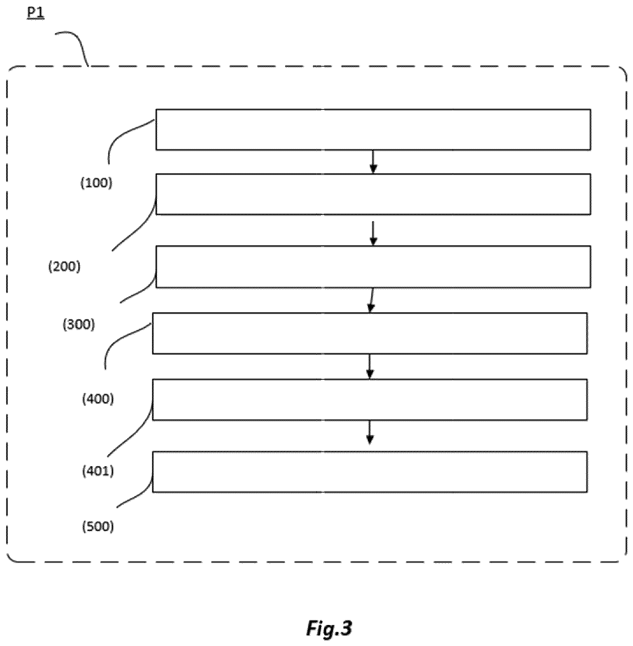

La figure 3 illustre les étapes du procédé d'identification selon un premier mode de réalisation de l'invention.

La première étape 100 consiste dans l'acquisition de données d'entrée visuelles capturées de la personne à identifier. Dans le cas décrit d'une identification par empreinte digitale, l'entrée acquise correspond à l'image de l'empreinte digitale d'un ou plusieurs doigts de la personne à identifier. Les caractéristiques biométriques correspondent à la position et la géométrie de quelques minuties parmi la liste des formes préalablement détaillée. (bifurcation, lac, crochet ...). Cette étape peut être réalisée à l'aide d'un capteur d'empreintes digitales ou tous autres moyens d'imagerie permettant la capture des empreintes. Nous allons nous limiter dans la description suivante à un seul doigt, mais il est souligné que le procédé peut être généralisé pour une pluralité de doigts ou tous les doigts d'une personne.

Alternativement, dans le cas d'une identification vocale, l'entrée capturée correspond à un enregistrement sonore de la voix de la personne à identifier. Les caractéristiques biométriques correspondent à la tonalité, les variations et le timbre spécifique à la personne.

La deuxième étape 200 consiste dans le calcul des caractéristiques biométriques à partir des données acquises. Plus particulièrement, l'image de l'empreinte digitale est analysée afin d'extraire les caractéristiques biométriques relatives à la localisation, le nombre et la géométrie (longueur et angle) de formes spécifiques de minutie. On cite à titre d'exemple non limitatif, les caractéristiques extraites suivantes :
- le nombre de minuties de même type (bifurcations, ponts, lac, delta, crochet ...)
- l'angle et la position d'une minutie, tel que l'angle d'un crochet, l'angle d'un pont, l'angle formé par un centre (cœur), l'angle formé par une bifurcation...
- ou la distance entre deux minuties de même type et leurs positions respectives.

La qualité de l'acquisition d'une empreinte dépend de plusieurs facteurs : la translation ou la rotation du doigt au niveau du capteur, les distorsions, les pressions et de l'état de la peau, le bruit, les contraintes de temps (seulement quelques secondes pour acquérir les empreintes). Des erreurs d'extraction des caractéristiques peuvent apparaître. Avantageusement, pour chaque caractéristique biométrique calculée, une note qualité est fournie par l'algorithme qui extrait les différentes caractéristiques du doigt. Cette note qualité correspond à un niveau de confiance ou la précision de la caractéristique biométrique calculée.

La troisième étape 300 consiste dans la sélection d'au moins un critère biométrique de classement. Ledit critère de classement doit être vérifié par les caractéristiques extraites de la personne à identifier. Par exemple, l'empreinte digitale du doigt n°i du demandeur présente les caractéristiques biométriques suivantes :
- CB1 : un nombre de bifurcations égal à 4,
- CB2 : un nombre de delta égal à 2,
- CB3 : la présence d'un crochet avec un angle par rapport à l'horizontale égale à 15°,
- CB4 : la présence d'un couple bifurcation - lac séparés d'une distance égale à 3mm.

Les critères de classement sont ainsi choisis de la manière suivante, le doigt n°i respecte :
Critère n°1 : Nombre de bifurcations inférieur ou égal à 5 et supérieur ou égale à 3.
Critère n°2 : la présence d'un crochet avec un angle par rapport à l'horizontale compris entre à 10° et 20.
Critère n°3 : la présence d'un couple bifurcation - lac séparés d'une distance comprise entre à 2mm et 5mm.

La limitation à trois critères de classement a pour but de simplifier la présentation du procédé selon l'invention. En pratique, le nombre de critères de classement est de l'ordre des centaines.

L'utilisation de plages de valeurs pour définir les critères de classement permet de prendre en compte les incertitudes de mesures des caractéristiques biométriques d'une manière générale. Cette incertitude est relative à la qualité de l'acquisition de l'image d'une empreinte digitale du demandeur ou d'un individu de la population à comparer. L'incertitude dépend aussi des conditions de l'acquisition des empreintes digitales telles que la pression exercée par le doigt sur la surface lors de l'acquisition, l'inclinaison du doigt lors de l'acquisition, et la netteté des minuties situées à la périphérie de l'empreinte digitale.

La quatrième étape (400) consiste dans la sélection d'un ensemble d'individus cibles satisfaisant audit au moins à certains critères biométriques de classement à partir d'une population globale prédéterminée. Chaque individu de l'ensemble d'individus cible présente des caractéristiques biométriques propres stockés dans une base de données. Plus particulièrement, pour chaque doigt, il s'agit d'une étape d'indexation de l'entrée biométrique acquise à au moins une liste choisie parmi une pluralité de listes préchargées dans un registre d'indexation. Chaque liste comprend une pluralité d'identifiants correspondant à un échantillon de la population globale. Chaque identifiant pointe sur un individu dudit échantillon présentant des caractéristiques biométriques qui obéissent à un critère de classement. Ainsi, pour l'exemple présenté avec les critères de classement critère n°1, critère n°2 et critère n°3, l'entrée biométrique acquise est indexée à une première liste L1, une deuxième liste L2 et une troisième liste L3. Nous rappelons que les caractéristiques biométriques de la population globale sont préalablement stockées dans une base de données externe.

La première liste L1 comprend les identifiants qui pointent vers les caractéristiques biométriques, dans la base de données des individus, de la population globale ayant un doigt n°i présentant un nombre de bifurcations inférieur ou égal à 5 et supérieur ou égale à 3.

La deuxième liste L2 comprend les identifiants qui pointent vers les caractéristiques biométriques, dans la base de données, des individus de la population globale ayant un doigt n°i présentant d'un crochet avec un angle par rapport à l'horizontale compris entre à 10° et 20.

La troisième liste L3 comprend les identifiants qui pointent vers les caractéristiques biométriques, dans la base de données des individus, des individus de la population globale ayant un doigt n°i présentant un couple bifurcation - lac séparés d'une distance comprise entre à 2mm et 5mm.

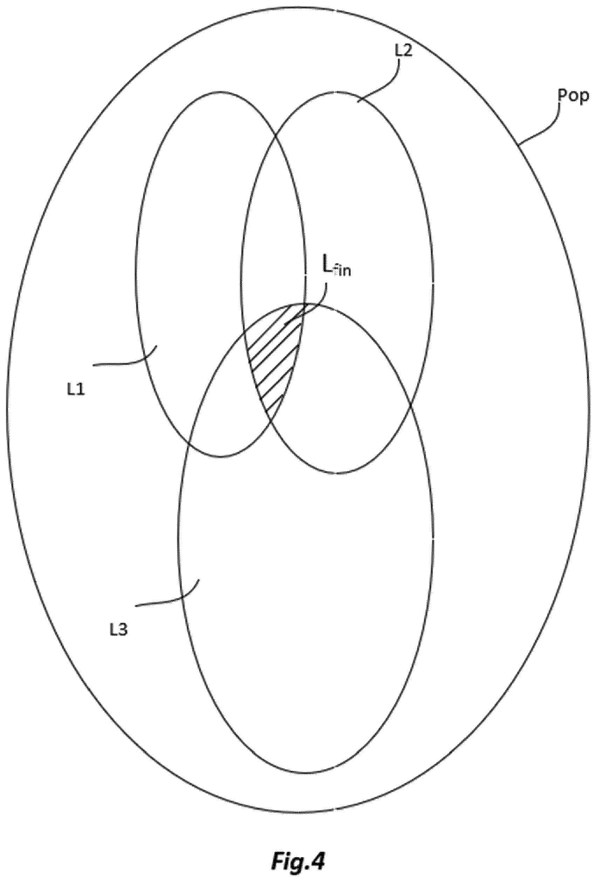

La figure 4 illustre un exemple d'échantillonnage de la population POP résultant de l'exécution de la quatrième étape 400 selon l'invention. La population globale POP comprend des dizaines de millions d'individus. La limitation à trois listes a pour but de simplifier la présentation du procédé selon l'invention. En pratique, le nombre de listes est de l'ordre de plusieurs centaines. Chacune des listes L1 à L3 correspond à un sous-ensemble de la population vérifiant respectivement les critères de classement 1 à 3. Les listes L1 à L3 font partie d'une pluralité de listes qui sont préalablement calculées et stockées selon plusieurs critères de classement.

Avantageusement, le procédé d'identification selon l'invention comprend une étape 401 de calcul d'un sous-ensemble de population dérivé de l'intersection entre toutes les listes d'identifiants indexées. Il s'agit de la liste L_{fin} correspondant à l'intersection entre les trois listes L1 à L3. Ainsi, la liste L_{fin} comprend les identifiants des individus vérifiant en même temps les critères 1 à 3. Ainsi, la liste L_{fin} correspond à sous-ensemble de la population Pop le plus réduit comprenant des individus susceptibles de présenter plusieurs caractéristiques biométriques similaires au demandeur. Cela permet une réduction considérable de la population à comparer et donc réduire au maximum le temps du procédé.

L'étape suivante 500 consiste dans la comparaison des caractéristiques biométriques de l'individu à identifier avec les caractéristiques biométriques propres à chaque individu de la liste finale ou d'au moins une liste parmi les listes L1 à L3. La comparaison est réalisée à l'aide d'algorithmes connus par l'Homme du métier. L'étape de comparaison permet de donner à chaque individu à comparer (L_{fin} ou L1 à L3) un score reflétant le degré de ressemblance avec l'empreinte digitale extraite du l'individu à identifier (demandeur). Il est ainsi possible d'identifier le demandeur pour une identification et/ou déterminer une tentative de fraude pour une première demande de document d'identifié (passeport, carte d'identité...).

La comparaison avec la liste d'intersection L_{fin} permet une réduction maximale du temps d'identification. On obtient une réduction d'une durée d'identification comprise entre 10 et 15 min pour une population de quelques dizaines de millions à une durée de l'ordre de plusieurs millisecondes pour l'utilisation de la liste L_{fin} comme échantillon de référence pour la comparaison. Cette configuration convient à des applications où le critère de vitesse d'exécution est prédominant par rapport à la fiabilité du résultat.

Avantageusement, il est possible suite à l'étape de comparaison des caractéristiques biométriques du demandeur à celles de la liste d'intersection L_{fin}, de réitérer la comparaison avec l'une ou toutes les listes L1 à L3. Cela permet d'élargir l'échantillon de référence à comparer et ainsi améliorer la fiabilité du procédé d'identification sans augmenter drastiquement la durée du procédé. Pour chaque liste L1 à L3 on associe un coefficient de priorité. Les coefficients de priorité sont configurables dans le registre des listes selon les spécificités de l'application. L'ordre des itérations de l'opération de comparaison est déterminé selon les coefficients de priorité respectifs à chacune des listes L1 à L3. Plus la plage de valeurs possibles d'un critère de classement est importante, plus la taille de l'échantillon cible est importante, plus le coefficient de priorité est faible. Le coefficient de priorité permet de définir l'ordre de comparaison par rapport à chacune des listes lors des itérations supplémentaires.

Avantageusement, il est possible de commencer en un premier temps par réaliser les opérations de comparaison des caractéristiques biométriques calculés ayant une note de qualité supérieure à un seuil prédéterminé, par rapport aux caractéristiques biométriques propres des individus appartenant à une liste présentant un coefficient de priorité supérieur à un seuil prédéterminé.

Ensuite, pour une seconde itération, les opérations de comparaison sont réalisées entre des caractéristiques biométriques calculés ayant une note de qualité inférieure au seuil prédéterminé, par rapport aux caractéristiques biométriques propres des individus appartenant à une liste présentant un coefficient de priorité supérieur à un seuil prédéterminé.

Ensuite pour une troisième itération, les opérations de comparaison sont réalisées pour des caractéristiques biométriques calculés ayant une note de qualité supérieure au seuil par rapport aux individus appartenant à d'autres listes présentant des coefficients de priorité inférieur au seuil prédéterminé.

Il est aussi possible de réaliser l'opération de comparaison uniquement sur le résultat de l'union des trois ensembles cibles détaillés précédemment ou bien de l'union de la première liste avec l'intersection des deux dernières.

D'une manière générale, il est possible de configurer la définition du périmètre et la priorité de l'ensemble d'individus cible selon des combinaisons des notes de qualité associées à chaque caractéristique biométrique propre et des coefficients de priorité associés à chaque liste. Nous allons décrire à titre d'exemple non limitatif la constitution d'un ensemble d'individus cible selon les notes de qualité et les coefficients de priorité. On liste les caractéristiques biométriques calculées suivantes du demandeur :
- CB1 : un nombre de bifurcations égal à 5, note de qualité q=8.
- CB2 : un nombre de delta égal à 2, note de qualité q=6.
- CB3 : la présence d'un crochet avec un angle par rapport à l'horizontale égale à 15°, note de qualité q=2.
- CB4 : la présence d'un couple bifurcation - lac séparés d'une distance égale à 3mm. Note de qualité q=4.
Il est possible d'avoir une liste de caractéristiques biométriques pour chaque doigt mais pour simplifier l'illustration, un seul doigt est pris en compte.

On considère en plus, les ensembles d'individus cibles suivants représentés dans le tableau ci-dessous :

| Ensemble d'individus cibles | Critère de classement | Identifiants des individus | Coefficient de priorité |
|---|---|---|---|
| L1 | N° Bifurcation >= 3 | fp13, fp20, fp150, fp152, fp200, fp250 | cp= 2 |
| L2 | N° Bifurcation >= 4 | fp20, fp152 | cp=8 |
| L3 | Angle(crochet)<20° | fp20, fp152, fp250, fp200 | cp=5 |
| L4 | N° delta <= 4 | fp13, fp152, fp250, fp301,fp20 | cp=5 |
| L5 | distance(bifurcation-lac)>mm | fp13, fp250, fp300, fp301 | cp=4 |

Dans une première itération on considère les caractéristiques biométriques ayant une note de qualité supérieure à 5 à savoir CB1 et CB2. On extrait une nouvelle sous-liste à partir des listes ayant un coefficient de priorité supérieur à 4. L'intersection des listes L2 et L4 donne ainsi les identifiants {fp20, fp152}.

On considère les caractéristiques biométriques ayant une note de qualité supérieure à 5 à savoir CB1 et CB2. On extrait une nouvelle sous-liste à partir des listes ayant un coefficient de priorité supérieur à 4. L'intersection des listes L2 et L4 donne ainsi les identifiants {fp20, fp152}.

Pour conclure, le procédé selon l'invention permet d'obtenir des résultats fiables tout en réduisant la durée d'exécution du procédé d'identification. Ces avantages sont obtenus grâce à l'indexation de l'empreinte digitale du demandeur à un sous-ensemble réduit de la population globale de référence. Ladite indexation est basée sur des listes obtenues selon des critères de classement à partir de caractéristiques biométriques. Cela permet une amélioration de la fiabilité du résultat par rapport aux solutions de l'état de l'art (filtrage par données de l'état civil). Cette solution nécessite un pré-traitement des caractéristiques biométriques de la population stockée dans la base de données. Les listes d'identifiant selon des critères biométriques prédéterminés sont créées préalablement dans le registre des listes pour être utilisées lors de l'indexation.

Dans l'exemple décrit, un seul doigt a été pris en compte. Mais en prenant en compte l'ensemble des doigts d'une personne, toutes les empreintes doivent satisfaire les critères définis. Ainsi, la fiabilité des résultats augmente avec l'ensemble des doigts et la taille de la liste d'identifiants respectant l'ensemble des critères diminue. La précision peut être améliorées si d'autres types de données biométriques (iris, visage) sont prises en compte.

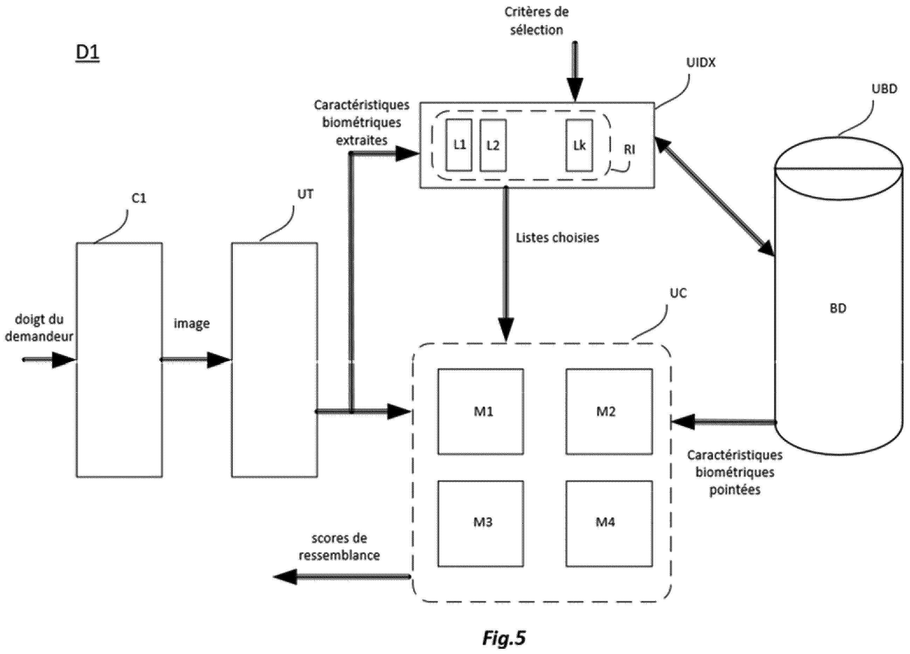

La figure 5 illustre un dispositif d'identification D1 configuré pour mettre en œuvre les étapes du procédé selon l'invention. Le dispositif d'identification D1 comprend : un capteur C1 pour l'acquisition de l'entrée visuelle ou sonore ; une unité de traitement UT pour extraire des caractéristiques biométriques à partir de l'entrée acquise par le capteur C1 ; une unité d'indexation UIDX configurée pour stocker le registre d'indexation RI et pour réaliser l'étape d'indexation 400 ; une unité de stockage de données UBD configurée pour stocker la base de données BD ; une pluralité d'unités de calcul M1 à M4 pour réaliser l'étape de comparaison 500.

L'unité d'indexation UIDX reçoit les critères de classement et réalise l'indexation de l'image acquise à une pluralité de listes selon les critères de classement. L'unité d'indexation calcule ainsi, à partir de ces listes et de la configuration choisie par l'utilisateur (compromis vitesse et fiabilité), le sous-ensemble de référence pour la comparaison. L'unité d'indexation commande la lecture des données biométriques à partir de la base de données BD selon le sous-ensemble de référence calculé.

## Revendications

1. Procédé d'identification biométrique (P1) d'un individu à identifier, ledit procédé comprenant :
- une étape (100) d'acquisition de données d'entrée, lesdites données d'entrée étant des données visuelles ou sonores de l'individu à identifier ;
- une étape (200) de calcul de caractéristiques biométriques à partir des données d'entrée, lesdites caractéristiques biométriques calculées vérifiant des critères biométriques de classement parmi une pluralité ;
- une étape (300) de sélection de plusieurs critères biométriques de classement vérifiés par lesdites caractéristiques biométriques calculées à partir des données d'entrée, parmi la pluralité de critères biométriques de classement ;
- une étape (400) de sélection de plusieurs ensembles d'individus cibles au sein de la population globale prédéterminée, chaque ensemble d'individus cibles sélectionné satisfaisant l'un des critères biométriques de classement sélectionnés (300) ;
- une étape (500) de comparaison des caractéristiques biométriques de l'individu à identifier avec les caractéristiques biométriques propres d'individus cibles d'une population prédéterminée, chaque individu cible ayant des caractéristiques biométriques propres stockées dans une base de données ;
ledit procédé d'identification biométrique (P1) étant **caractérisé en ce que** :
- il comporte une étape (401) de calcul d'un sous-ensemble de population dérivé résultant de l'intersection entre lesdits plusieurs ensembles d'individus cibles sélectionnés (400), c'est-à-dire un sous-ensemble d'individus cibles satisfaisant les critères biométriques de classement sélectionnés (300) ;
- l'étape (500) de comparaison des caractéristiques biométriques de l'individu à identifier avec les caractéristiques biométriques propres d'individus cibles d'une population prédéterminée est agencée de sorte que lesdites caractéristiques biométriques de l'individu à identifier ne sont comparées qu'à celles des individus cibles appartenant audit sous-ensemble de population dérivé.

2. Procédé d'identification biométrique (P1) selon la revendication précédente dans lequel le nombre de critères biométriques de classement sélectionnés pendant l'étape (300) de sélection de plusieurs critères biométriques de classement est supérieur à 100.

3. Procédé d'identification biométrique (P1) selon l'une quelconque des revendications précédentes dans lequel chaque caractéristique biométrique est associée à une note de qualité.

4. Procédé d'identification biométrique (P1) selon l'une quelconque des revendications 2 à 3 dans lequel l'étape (500) de comparaison des caractéristiques biométriques est itérée pour une pluralité d'ensembles d'individus cibles associés à des critères biométriques de classement distincts selon un ordre déterminé par un coefficient de priorité associé à chaque ensemble d'individus cibles sélectionné à l'issue de l'étape (400) de sélection de plusieurs ensembles d'individus cibles satisfaisant respectivement les critères biométrique de classement sélectionnés (300).

5. Procédé d'identification biométrique (P1) selon l'une quelconque des revendications précédentes dans lequel chaque caractéristique biométrique présente :
- une première composante définissant la nature de la caractéristique biométrique,
- une deuxième composante définissant la valeur mesurée de la caractéristique biométrique.

6. Procédé d'identification biométrique (P1) selon l'une quelconque des revendications précédentes dans lequel :
- la donnée d'entrée est l'image d'une ou plusieurs empreintes digitales ;
- les caractéristiques biométriques comprennent au moins le nombre de minuties de même type, ou l'angle et la position d'une minutie, ou la longueur et la position d'une minutie ou la distance entre deux minuties et leurs positions respectives.

7. Dispositif d'identification (D1) configuré pour mettre en œuvre les étapes du procédé (P1) selon l'une quelconque des revendications 1 à 6, comprenant :
- un capteur (C1) pour l'acquisition des données d'entrée visuelle ou sonore ;
- une unité de traitement (UT) pour calculer les caractéristiques biométriques à partir de l'entrée acquise par le capteur (C1) ;
- une unité d'indexation (UIDX) configurée pour stocker un registre d'indexation (RI) et pour réaliser l'étape (400) de sélection d'un ensemble d'individus cibles ;
- une unité de stockage de données (UBD) configurée pour stocker la base de données (BD) ;
- au moins une unité de calcul (M1) pour réaliser l'étape de comparaison (500).

8. Programme d'ordinateur comprenant des instructions qui, lorsque le programme d'ordinateur est exécuté par le dispositif d'identification (D1) selon la revendication 7, conduisent ledit dispositif d'identification (D1) à mettre en œuvre le procédé d'identification selon l'une quelconque des revendications 1 à 6.

## Patentansprüche

1. Verfahren (P1) für eine biometrische Identifizierung einer zu identifizierenden Person, das Verfahren umfassend:
- einen Schritt (100) zum Erfassen von Eingabedaten, wobei es sich bei den Eingabedaten um visuelle oder akustischer Daten der zu identifizierenden Person handelt;
- einen Schritt (200) zum Berechnen biometrischer Merkmale aus den Eingabedaten, wobei die berechneten biometrischen Merkmale biometrische Klassifizierungskriterien aus einer Vielzahl verifizieren;
- einen Schritt (300) zum Auswählen mehrerer biometrischer Klassifizierungskriterien, die durch die aus den Eingabedaten berechneten biometrischen Merkmale verifiziert werden, aus der Vielzahl biometrischer Klassifizierungskriterien;
- einen Schritt (400) zum Auswählen mehrerer Zielpersonengruppen aus der vorbestimmten Gesamtpopulation, wobei jede ausgewählte Zielpersonengruppe eines der ausgewählten biometrischen Klassifizierungskriterien (300) erfüllt;
- einen Schritt (500) zum Vergleichen der biometrischen Merkmale der zu identifizierenden Person mit den spezifischen biometrischen Merkmalen von Zielpersonen einer vorbestimmten Population, wobei jede Zielperson über spezifische biometrische Merkmale verfügt, die in einer Datenbank gespeichert sind;
wobei das Verfahren (P1) für die biometrische Identifizierung **dadurch gekennzeichnet ist, dass:**
- es einen Schritt (401) zum Berechnen einer abgeleiteten Populationsuntergruppe aufweist, die sich aus der Schnittmenge zwischen den mehreren ausgewählten Zielpersonengruppen (400) ergibt, das heißt einer Zielpersonenuntergruppe, die die ausgewählten biometrischen Klassifizierungskriterien (300) erfüllt;
- der Schritt (500) des Vergleichens der biometrischen Merkmale der zu identifizierenden Person mit den spezifischen biometrischen Merkmalen von Zielpersonen einer vorbestimmten Population so ausgelegt ist, dass die biometrischen Merkmale der zu identifizierenden Person nur mit denen der Zielpersonen verglichen werden, die zu der abgeleiteten Populationsuntergruppe gehören.

2. Verfahren (P1) für die biometrische Identifizierung nach dem vorstehenden Anspruch, wobei die Anzahl der biometrischen Klassifizierungskriterien, die während des Schritts (300) zum Auswählen mehrerer biometrischer Klassifizierungskriterien ausgewählt werden, größer als 100 ist.

3. Verfahren (P1) für die biometrische Identifizierung nach einem der vorstehenden Ansprüche, wobei jedes biometrische Merkmal einer Qualitätsbewertung zugeordnet ist.

4. Verfahren (P1) für die biometrische Identifizierung nach einem der Ansprüche 2 bis 3, wobei der Schritt (500) zum Vergleichen der biometrischen Merkmale für eine Vielzahl von Zielpersonengruppen, die unterschiedlichen biometrischen Klassifizierungskriterien zugeordnet sind, gemäß einer Reihenfolge iteriert wird, die durch einen Prioritätskoeffizienten bestimmt wird, der jeder Zielpersonengruppe zugeordnet ist, die am Ende des Schritts (400) zum Auswählen mehrerer Zielpersonengruppen ausgewählt wird, die jeweils die ausgewählten biometrischen Klassifizierungskriterien (300) erfüllen.

5. Verfahren (P1) für die biometrische Identifizierung nach einem der vorstehenden Ansprüche, wobei jedes biometrische Merkmal vorweist:
- eine erste Komponente, die die Art des biometrischen Merkmals definiert,
- eine zweite Komponente, die den gemessenen Wert des biometrischen Merkmals definiert.

6. Verfahren (P1) für die biometrische Identifizierung nach einem der vorstehenden Ansprüche, wobei:
- das Eingabedatenelement das Bild eines oder mehrerer Fingerabdrücke ist;
- die biometrischen Merkmale mindestens die Anzahl der Minutien desselben Typs oder den Winkel und die Position einer Minutie oder die Länge und die Position einer Minutie oder den Abstand zwischen zwei Minutien und deren jeweilige Positionen umfassen.

7. Identifizierungsvorrichtung (D1), die zum Durchführen der Schritte des Verfahrens (P1) nach einem der Ansprüche 1 bis 6 konfiguriert ist, umfassend:
- einen Sensor (C1) zum Erfassen visueller oder akustischer Eingabedaten;
- eine Verarbeitungseinheit (UT) zum Berechnen der biometrischen Merkmale aus der durch den Sensor (C1) erfassten Eingabe;
- eine Indexierungseinheit (UIDX), die zum Speichern eines Indexierungsregisters (RI) und Umsetzen des Schritts (400) zum Auswählen einer Zielpersonengruppe konfiguriert ist;
- eine Datenspeichereinheit (UBD), die zum Speichern der Datenbank (BD) konfiguriert ist;
- mindestens eine Berechnungseinheit (M1) zum Umsetzen des Schritts zum Vergleichen (500).

8. Computerprogramm umfassend Anweisungen, die, wenn das Computerprogramm durch die Identifizierungsvorrichtung (D1) nach Anspruch 7 ausgeführt wird, die Identifizierungsvorrichtung (D1) dazu veranlassen, das Identifizierungsverfahren nach einem der Ansprüche 1 bis 6 durchzuführen.

## Claims

1. Method for biometric identification (P1) of an individual to be identified, said method comprising:
- a step (100) of acquiring input data, said input data being visual or audio data of the individual to be identified;
- a step (200) of calculating biometric characteristics from the input data, said calculated biometric characteristics verifying biometric classification criteria among a plurality;
- a step (300) of selecting several biometric classification criteria verified by said biometric characteristics calculated from the input data, from among the plurality of biometric classification criteria;
- a step (400) of selecting several sets of target individuals within the predetermined global population, each selected set of target individuals satisfying one of the selected biometric classification criteria (300);
- a step (500) of comparing the biometric characteristics of the individual to be identified with the specific biometric characteristics of target individuals from a predetermined population, each target individual having specific biometric characteristics stored in a database;
said biometric identification method (P1) being **characterized in that:**
- it comprises a step (401) of calculating a derived population subset resulting from the intersection between said several selected sets of target individuals (400), i.e. a subset of target individuals satisfying the selected biometric classification criteria (300);
- the step (500) of comparing the biometric characteristics of the individual to be identified with the specific biometric characteristics of target individuals of a predetermined population is arranged so that said biometric characteristics of the individual to be identified are compared only with those of target individuals belonging to said derived population subset.

2. Biometric identification method (P1) according to the preceding claim, wherein the number of biometric classification criteria selected during the step (300) of selecting several biometric classification criteria is greater than 100.

3. Biometric identification method (P1) according to any of the preceding claims, wherein each biometric characteristic is associated with a quality score.

4. Biometric identification method (P1) according to any of claims 2 to 3, wherein the step (500) of comparing biometric characteristics is iterated for a plurality of sets of target individuals associated with distinct biometric classification criteria according to an order determined by a priority coefficient associated with each set of target individuals selected at the end of the step (400) of selecting several sets of target individuals respectively satisfying the selected biometric classification criteria (300).

5. Biometric identification method (P1) according to any of the preceding claims, wherein each biometric characteristic has:
- a first component defining the nature of the biometric characteristic,
- a second component defining the measured value of the biometric characteristic.

6. Biometric identification method (P1) according to any of the preceding claims, wherein:
- the input data is the image of one or more fingerprints;
- the biometric characteristics include at least the number of minutiae of the same type, or the angle and position of a minutia, or the length and position of a minutia, or the distance between two minutiae and their respective positions.

7. Identification device (D1) configured to implement the steps of the method (P1) according to any of claims 1 to 6, comprising:
- a sensor (C1) for acquiring visual or audio input data;
- a processing unit (UT) for calculating the biometric characteristics from the input acquired by the sensor (C1);
- an indexing unit (UIDX) configured to store an indexing register (RI) and to perform the step (400) of selecting a set of target individuals;
- a data storage unit (UBD) configured to store the database (BD);
- at least one calculation unit (M1) to perform the comparison step (500).

8. Computer program comprising instructions which, when the computer program is executed by the identification device (D1) according to claim 7, cause said identification device (D1) to implement the identification method according to any of claims 1 to 6.
